# EUROPEAN PATENT SPECIFICATION

(11) **EP 0 519 533 B1**
(45) Date of publication and mention of the grant of the patent: **10.05.1995**
(21) Application number: 92201414.7
(22) Date of filing: 19.05.1992
(51) Int. Cl.: B60T 11/236, F16J 15/56

(54) **Master cylinder and end fitting therefor**
Hauptzylinder und Dichtung dafür
Maître-cylindre et anneau d'étanchéité pour celui-ci

(30) Priority: 15.06.1991 GB 9112949; 02.12.1991 GB 9125590
(43) Date of publication of application: 23.12.1992
(73) Proprietor: DELPHI FRANCE AUTOMOTIVE SYSTEMS, F-92231 Gennevilliers (FR)
(72) Inventor: Savidan, Henri, F-95270 Luzarches (FR)
(74) Representative: Denton, Michael John

(56) References cited:
- CH-A- 667 141
- DE-A- 3 738 512
- GB-A- 2 144 501
- GB-A- 2 156 924

## Description

The present invention relates to a master cylinder for a vehicle, and in particular to an end fitting which provides both sealing and bearing-type functions for the master cylinder.

Master cylinders are used in both brake and clutch systems in vehicles in which hydraulic fluid is used for operating the brakes or clutch of the vehicle. Known master cylinders usually comprise a housing having a bore therein which extends longitudinally and which is closed a one end. One or more pistons are slidably positioned in the bore, and an actuating rod engages the piston closest to the open end for actuation of the brakes or clutch. A spring associated with each piston biases the piston towards the open end of the bore. The actuating rod is connected to a foot pedal or other means operable by the vehicle operator. The rear end of the piston closest to the open end extends longitudinally through the open end of the bore. A rigid plug closes the open end of the master cylinder and acts as a form of bearing for the rear end of the piston where it extends through the open end, and also acts, together with a suitable ring stop, as an abutment for the spring biased piston or pistons. Elastomeric seals between the plug and the rear end of the piston, and between the plug and the surface of the bore form a substantially fluid tight seal at the open end of the bore to substantially prevent egress of hydraulic fluid and ingress of dirt and moisture. An example of the prior art is shown in GB Patent Application No. 2144501A.

The combination of the plug and two separate elastomeric seals to close and seal the open end of the bore is difficult to assemble. It is therefore an object of the present invention to overcome this disadvantage.

To this end, a master cylinder in accordance with the present invention comprises a housing; a bore extending longitudinally through the housing and being open at one end and closed at the other end; a piston slidably positioned in the bore and being biased towards the open end of the bore, the piston having a rear end extending through the open end; and an end fitting for closing and sealing the open end of the bore, the end fitting comprising a first annular member of substantially rigid material and a second annular member of elastomeric material, the second annular member having an inner wall directed towards the rear end of the piston and forming a close sliding fit therewith, and an outer wall directed towards the surface of the bore at the open end and forming a close sliding fit therewith, the first annular member having a number of apertures extending from a front face to a rear face, and the second annular member being moulded to the front face of the first annular member and into the apertures therein to form the end fitting as a one-piece sub-assembly, the inner wall of the second annular member having at least one circumferentially extending, inwardly directed, lip for sealingly engaging the rear end of the piston, and the outer wall of the second annular member having at least one circumferentially extending, outwardly directed, ridge for sealingly engaging the surface of the bore.

For the sake of clarity, a rearward direction is taken to be facing away from, or directed away from, the closed end of the bore; a forward or front facing direction is taken to be facing towards, or directed towards, the closed end of the bore; an inward direction is taken to be facing towards, or directed towards, the longitudinal central axis of the bore; and the outward direction is taken to be facing away from, or directed away from, the longitudinal central axis of the bore.

The present invention has the advantage that the end fitting is formed as a one-piece sub-assembly which is easier to handle on assembly of the master cylinder, and replaces three items in the previously known arrangements.

The first annular member preferably has an inner wall directed towards the rear end of the piston and forms a close sliding fit therewith, and an outer wall directed towards the surface of the bore at the open end and forms a close sliding fit therewith. Alternatively, the first annular member may have an inner wall directed towards the rear end of the piston and an outer wall directed towards the surface of the bore at the open end, the inner wall being covered by a first extension of the second annular member which extends in a rearward direction and the outer wall being covered by a second extension of the second annular member which extends in the rearward direction, the first and second extensions forming a close sliding fit with the rear end of the piston and the surface of the bore respectively. In this latter case, the first extension preferably has a number of inwardly directed, axially and circumferentially extending, ridges in its surface which forms the close sliding fit with the rear end of the piston.

Preferably, the cross-sectional area of the apertures at the front face is smaller than the cross-sectional area of the apertures at the rear face. In this case, walls defining the apertures preferably diverge as the apertures extend from the front face to the rear face.

The inner wall of the second annular member preferably has two circumferentially extending, inwardly directed, lips.

Preferably, the outer wall of the second annular member has three circumferentially extending, outwardly directed, ridges.

The outer wall of the second annular member preferably has a peripherally extending, forwardly directed, ridge for biasing the end fitting against a ring stop positioned in the bore adjacent the open end thereof.

A spring is preferably positioned in the bore between the closed end of the bore and the piston to provide the resilient bias for the piston.

The present invention also includes an end fitting for a master cylinder as herein described.

The present invention will now be described, by way of example, with reference to the accompanying drawings, in which:-
Figure 1 is a cross-sectional view of a master cylinder in accordance with the present invention;
Figure 2 is a perspective view, partly in cross-section, of the end fitting of the master cylinder shown in Figure 1;
Figure 3 is a view of the front face of the first annular member of the end fitting of Figure 2;
Figure 4 is a view of the rear face of the first annular member of the end fitting of Figure 2;
Figure 5 is a partial cross-sectional view of the sealing arrangement between the end fitting and the piston of the master cylinder of Figure 1; and
Figure 6 is a perspective view, partly in cross-section of an alternative embodiment of end fitting for use with the master cylinder shown in Figure 1.

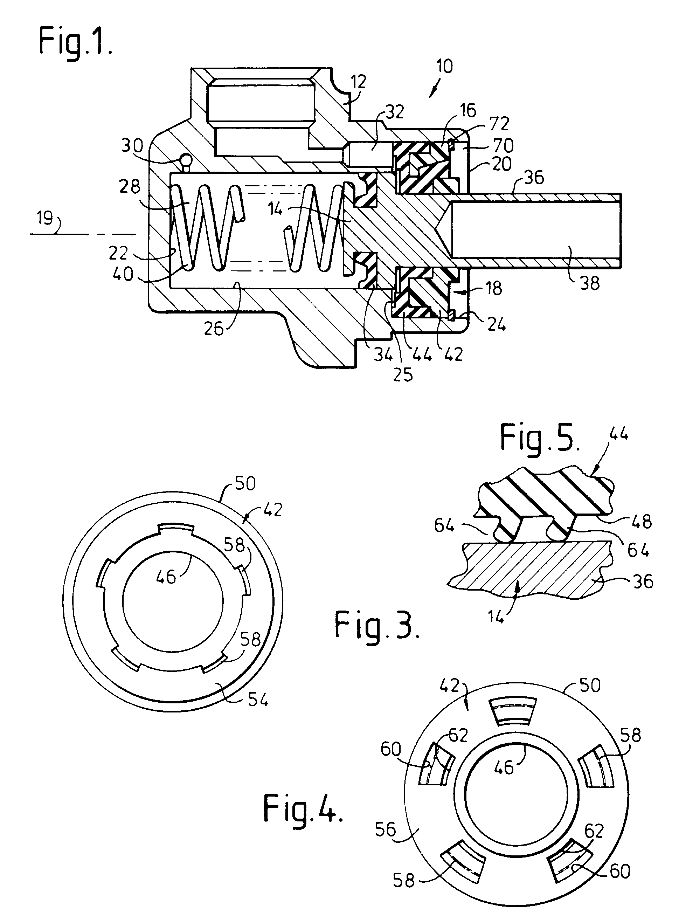

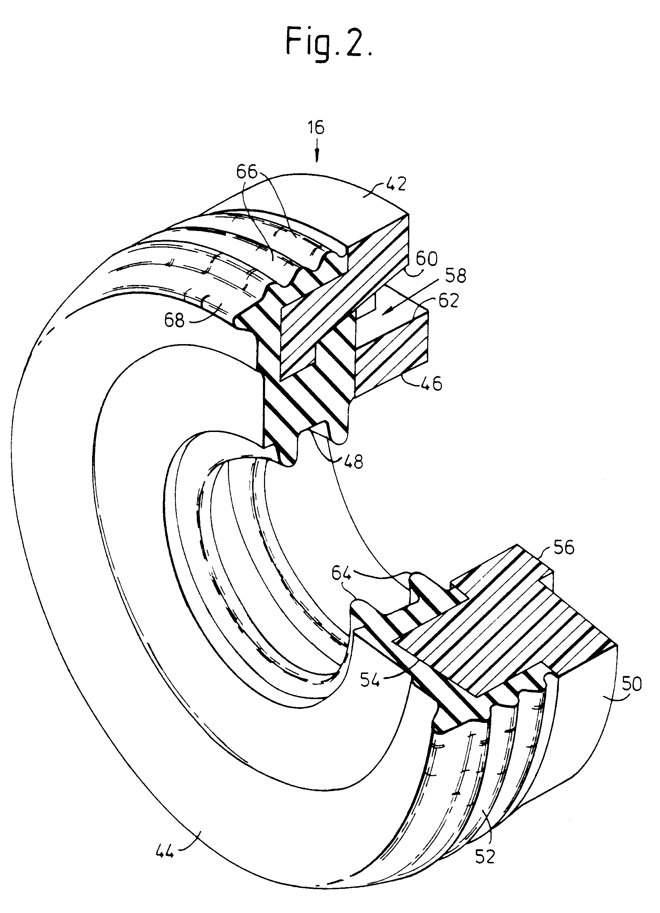

Referring to Figure 1, a master cylinder 10 for the brake or clutch system of a vehicle (not shown) is shown which comprises a housing 12, a piston 14, and an end fitting 16. The housing 12 is typically cast in one piece from aluminium or an aluminium alloy. The housing 12 has a bore 18 formed therein which extends longitudinally from an open end 20 to a closed end 22. The bore 18 has a longitudinal central axis 19. The bore 18 is defined by a first surface 24 adjacent the open end, and by a second surface 26 adjacent the closed end 22, the diameter of the bore at the first surface being greater than at the second surface. The piston 14 makes a sliding fit with the second surface 26 of the bore 18, and defines a high pressure chamber 28 in the bore between the piston and the closed end 22 of the bore. An outlet 30 fluidly connects the high pressure chamber 28 with the brakes or clutch of the vehicle. The high pressure chamber 28 is fluidly connected to a reservoir (not shown) of hydraulic fluid by way of an inlet passage 32. An elastomeric cup seal 34 mounted on the piston 14, and sealingly engaging the second surface 26, allows passage of hydraulic fluid from the inlet passage 32 to the high pressure chamber 28, but not in the reverse direction.

The piston 14 has a rear end 36 which extends in a longitudinal direction out of the open end 20 of the bore 18, and has a piston bore 38 for connection to an actuating rod (not shown). On actuation by the vehicle operator, the piston 14 is moved towards the closed end 22 of the bore against the bias of a spring 40 to increase the pressure in the hydraulic fluid in the high pressure chamber 28 and thereby actuate the brakes or clutch. On release, the spring 40 moves the piston 14 back to the rest position shown in Figure 1. This arrangement is well known to those skilled in the art, and will not be described in greater detail.

In accordance with the present invention, a novel end fitting 16 is provided for the master cylinder 10. The end fitting 16 acts as a form of bearing for the piston 14 in that the end fitting maintains the longitudinal axis of the piston substantially aligned with the longitudinal axis 19 of the bore, that is, the end fitting substantially prevents the piston tipping out of alignment. The end fitting 16 also closes and seals the open end 20 of the bore 18 to substantially prevent egress of hydraulic fluid from the master cylinder 10, and substantially prevent ingress of dirt and moisture into the master cylinder.

The end fitting 16 is formed as a one-piece sub-assembly and comprises a first annular member 42 and a second annular member 44. The first and second annular members 42,44 have inner walls 46,48 respectively directed towards the rear end 36 of the piston 14 which make a close sliding fit therewith, and outer walls 50,52 respectively directed towards the first surface 24 of the bore 18 which make a close sliding fit therewith. The first annular member 42 is cast or moulded in one-piece from substantially rigid material, for example bakelite or other suitable plastics material, and has a front face 54 directed towards the closed end 22 of the bore 18, and a rear face 56 directed towards the open end 20 of the bore. A number of apertures 58 are formed in the first annular member 42 which extend from the front face 54 to the rear face 56. In a preferred arrangement, the apertures 58 are tapered or conical such that their cross-sectional area at the front face 54 is smaller than their cross-sectional area at the rear face 56, that is, the walls 60,62 defining the apertures diverge as the apertures extend from the front face to the rear face. The close sliding fit between the inner wall 46 of the first annular member 42 and the rear end 36 of the piston 14, and between the outer wall 50 of the first annular member and the first surface 24 of the bore 18 substantially maintain the piston in alignment in the bore.

The second annular member 44 is formed from any suitable elastomeric material (for example, EDPM or other suitable rubber) and is moulded to the front face 54 of the first annular member 42 to form the end fitting 16 as a one-piece sub-assembly. During the moulding of the second annular member 44, the material extrudes into the apertures 58 in the first annular member 42 to secure the annular members together, and the preferred tapering of the apertures enhances the securing of the annular members together. The inner wall 48 of the second annular member 44 is formed with two circumferentially extending, inwardly directed, lips 64 which sealingly engage the rear end 36 of the piston 14. This arrangement is shown in greater detail in Figure 5. The fluid pressure to the right (as viewed in Figure 5) of the lips 64 is at substantially atmospheric pressure, and is the pressure of the fluid in the inlet passage 32. The fluid pressure to the left of the lips 64 may also be substantially atmospheric pressure. However, where the master cylinder 10 is connected to a vacuum powered booster (that is, at its open end 20), the fluid pressure to the left of the lips 64 may be substantially below atmospheric pressure. The lips 64 are preferably of such a shape that the pressure differential across the lips enhances the pressing action of the lips into engagement with the rear end 36 of the piston 14 to enhance the sealing action of the lips, and to substantially prevent egress of fluid from the master cylinder, even when connected to a vacuum powered booster. Similarly, the outer wall 52 of the second annular member 44 is formed with three circumferentially extending, outwardly directed, ridges 66 which sealingly engage the first surface 24 of the bore 18. A peripherally extending ridge 68 is also formed as an extension of the outer wall 52, the ridge 68 being directed away from (in a forward direction) the front face 54 of the first annular member 42, that is, towards the closed end 22 of the bore 18. The peripherally extending ridge 68 engages a shoulder 25 formed between the first and second surfaces 24,26 respectively, and acts to resiliently bias the end fitting 16 into engagement with a ring stop 70. The ring stop 70 is positioned in a circumferentially extending groove 72 in the first surface 24 of the bore 18 adjacent the open end 20, and retains the end fitting 16 in position in the master cylinder 10.

Whilst only one piston is shown in the above embodiment, it will be appreciated that the present invention equally applies to master cylinders having two or more pistons. Similarly, whilst the spring is shown positioned within the bore, it will be appreciated that a spring for biasing the piston may be positioned outside the bore.

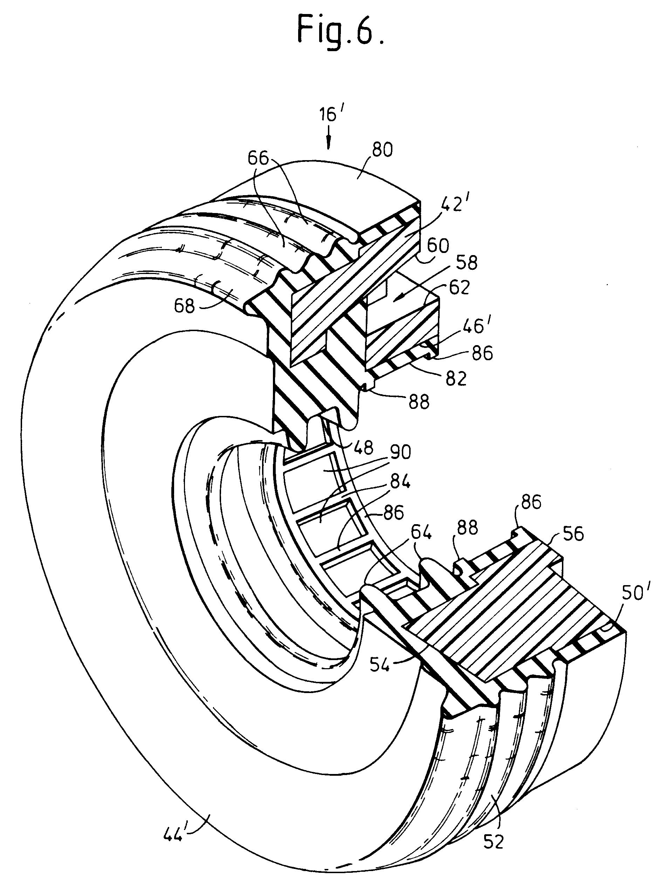

An alternative embodiment of end fitting 16' is shown in Figure 6. In this alternative embodiment, like parts have been given the same reference numeral as those shown in Figure 2, but primed (') where a modification has been made. The first annular member 42' has reduced thickness between its inner and outer walls, 46',50', respectively when compared to the first annular member 42 shown in Figure 2. A first rearwardly directed extension 82 of the second annular member 44' covers the inner wall 46' of the first annular member 42', and a second rearwardly directed extension 80 of the second annular member covers the outer wall 50'. The first extension 82 forms a close sliding fit with the rear end of the piston, and the second extension 80 forms a close sliding fit with the first surface of the bore. The surface of the first extension 82 which forms the close sliding fit with the rear end of the piston has a number of inwardly directed axially extending ridges 84 formed therein, and a pair of inwardly directed circumferentially extending ridges 86,88 formed therein. The ridges 86,88 interconnect the ends of the ridges 84 to form depressions 90 therebetween. This arrangement helps the piston to slide in an axial direction relative to the end fitting.

## Claims

1. A master cylinder (10) comprising a housing (12); a bore (18) extending longitudinally through the housing and being open at one end (20) and closed at the other end (22); a piston (14) slidably positioned in the bore and being biased towards the open end of the bore, the piston having a rear end (36) extending through the open end; and an end fitting (16) for closing and sealing the open end of the bore; characterised in that the end fitting comprises a first annular member (42) of substantially rigid material and a second annular member (44) of elastomeric material, the second annular member having an inner wall (48) directed towards the rear end of the piston and forming a close sliding fit therewith, and an outer wall (52) directed towards the surface (24) of the bore at the open end and forming a close sliding fit therewith, the first annular member having a number of apertures (58) extending from a front face (54) to a rear face (56), and the second annular member being moulded to the front face of the first annular member and into the apertures therein to form the end fitting as a one-piece sub-assembly, the inner wall of the second annular member having at least one circumferentially extending, inwardly directed, lip (64) for sealingly engaging the rear end of the piston, and the outer wall of the second annular member having at least one circumferentially extending, outwardly directed, ridge (66) for sealingly engaging the surface of the bore.

2. A master cylinder as claimed in claim 1, wherein the first annular member (42) has an inner wall (46) directed towards the rear end (36) of the piston (14) and forms a close sliding fit therewith, and an outer wall (50) directed towards the surface (24) of the bore (18) at the open end (20) and forms a close sliding fit therewith.

3. A master cylinder as claimed in claim 1, wherein the first annular member (42') has an inner wall (46') directed towards the rear end (36) of the piston (14) and an outer wall (50') directed towards the surface (24) of the bore (18) at the open end (20), the inner wall being covered by a first extension (82) of the second annular member (44') which extends in a rearward direction and the outer wall being covered by a second extension (80) of the second annular member which extends in the rearward direction, the first and second extensions forming a close sliding fit with the rear end of the piston and the surface of the bore respectively.

4. A master cylinder as claimed in claim 3, wherein the first extension (82) has a number of inwardly directed, axially and circumferentially extending, ridges (84,86,88) in its surface which forms the close sliding fit with the rear end (20) of the piston (14).

5. A master cylinder as claimed in any one of claims 1 to 4, wherein the cross-sectional area of the apertures (58) at the front face (54) is smaller than the cross-sectional area of the apertures at the rear face (56).

6. A master cylinder as claimed in claim 5, wherein walls defining the apertures (58) diverge as the apertures extend from the front face (54) to the rear face (56).

7. A master cylinder as claimed in any one of claims 1 to 6, wherein the inner wall (48) of the second annular member (44) has two circumferentially extending, inwardly directed, lips (64).

8. A master cylinder as claimed in any one of claims 1 to 7, wherein the outer wall (52) of the second annular member (44) has three circumferentially extending, outwardly directed, ridges (66).

9. A master cylinder as claimed in any one of Claims 1 to 8, wherein the outer wall (52) of the second annular member (44) has a peripherally extending, forwardly directed, ridge (68) for biasing the end fitting (16) against a ring stop (70) positioned in the bore (18) adjacent the open end (20) thereof.

10. A master cylinder as claimed in any one of claims 1 to 9, wherein a spring (40) is positioned in the bore (18) between the closed end (22) of the bore and the piston (14) to provide the resilient bias for the piston.

11. An end fitting (16) for a master cylinder (10) as claimed in any one of claims 1 to 10, comprising a first annular member (42) of substantially rigid material and a second annular member (44) of elastomeric material, the second annular member having an inner wall (48) directable towards the rear end of the piston and being capable of forming a close sliding fit therewith, and an outer wall (52) directable towards the surface (24) of the bore at the open end and being capable of forming a close sliding fit therewith, the first annular member having a number of apertures (58) extending from a front face (54) to a rear face (56), and the second annular member being moulded to the front face of the first annular member and into the apertures therein to form the end fitting as a one-piece sub-assembly, the inner wall of the second annular member having at least one circumferentially extending, inwardly directed, lip (64) sealingly engagable with the rear end of the piston, and the outer wall of the second annular member having at least one circumferentially extending, outwardly directed, ridge (66) sealingly engagable with the surface of the bore.

## Patentansprüche

1. Ein Hauptzylinder (10) mit einem Gehäuse (12), einer Bohrung (18), die sich longitudinal durch das Gehäuse erstreckt sowie an dem einen Ende (20) offen und an dem anderen Ende (22) geschlossen ist, einem Kolben (14), der gleitbar in der Bohrung angeordnet und auf das offene Ende der Bohrung zu vorgespannt ist, wobei der Kolben ein hinteres Ende (36) aufweist, das sich durch das offene Ende erstreckt, und einem Endpaßstück (16) zum Verschließen und Abdichten des offenen Endes der Bohrung,
**dadurch gekennzeichnet**,
daß das Endpaßstück ein erstes ringförmiges Bauteil (42) aus im wesentlichen starrem Material und ein zweites ringförmiges Bauteil (44) aus elastomerischem Material umfaßt, wobei das zweite ringförmige Bauteil eine innere Wand (48), die auf das hintere Ende des Kolbens zu gerichtet ist und einen engen Gleitsitz damit bildet, und eine äußere Wand (52) aufweist, die auf die Oberfläche (24) der Bohrung an dem offenen Ende zu gerichtet ist und einen engen Gleitsitz damit bildet, das erste ringförmige Bauteil eine Anzahl von Öffnungen (58) aufweist, die sich von einer vorderen Seite (54) zu einer hinteren Seite (56) erstrecken, das zweite ringförmige Bauteil an die vordere Seite des ersten ringförmigen Bauteils und in die Öffnungen darin hinein geformt ist, um das Endpaßstück als eine einstückige Unteranordnung zu bilden, die innere Wand des zweiten ringförmigen Bauteils wenigstens eine sich in Umfangsrichtung erstreckende, nach innen gerichtete Lippe (64) aufweist für einen abdichtenden Eingriff mit dem hinteren Ende des Kolbens, und die äußere Wand des zweiten ringförmigen Bauteils wenigstens eine sich in Umfangsrichtung erstreckende, nach außen gerichtete Rippe (66) aufweist für einen abdichtenden Eingriff mit der Oberfläche der Bohrung.

2. Ein Hauptzylinder wie in Anspruch 1 beansprucht,
worin das erste ringförmige Bauteil (42) eine innere Wand (46), die auf das hintere Ende (36) des Kolbens (14) zu gerichtet ist und einen engen Gleitsitz damit bildet, und eine äußere Wand (50) aufweist, die auf die Oberfläche (24) der Bohrung (18) an dem offenen Ende (20) zu gerichtet ist und einen engen Gleitsitz damit bildet.

3. Ein Hauptzylinder wie in Anspruch 1 beansprucht,
worin das erste ringförmige Bauteil (42') eine innere Wand (46'), die auf das hintere Ende (36) des Kolbens (14) zu gerichtet ist, und eine äußere Wand (50') aufweist, die auf die Oberfläche (24) der Bohrung (18) an dem offenen Ende (20) zu gerichtet ist, wobei die innere Wand von einer ersten Erweiterung (82) des zweiten ringförmigen Bauteils (44') bedeckt ist, die sich in einer Rückwärtsrichtung erstreckt, die äußere Wand von einer zweiten Erweiterung (80) des zweiten ringförmigen Bauteils bedeckt ist, die sich in der Rückwärtsrichtung erstreckt, und die ersten und zweiten Erweiterungen jeweils einen engen Gleitsitz mit dem hinteren Ende des Kolbens und der Oberfläche der Bohrung bilden.

4. Ein Hauptzylinder wie in Anspruch 3 beansprucht,
worin die erste Erweiterung (82) eine Anzahl von nach innen gerichteten, sich axial und in Umfangsrichtung erstreckenden Rippen (84, 86, 88) in ihrer Oberfläche aufweist, welche den engen Gleitsitz mit dem hinteren Ende (20) des Kolbens (14) bildet.

5. Ein Hauptzylinder wie in einem der Ansprüche 1 bis 4 beansprucht,
worin die Querschnittsfläche der Öffnungen (58) an der vorderen Seite (54) kleiner ist als die Querschnittsfläche der Öffnungen an der hinteren Seite (56).

6. Ein Hauptzylinder wie in Anspruch 5 beansprucht,
worin Wände, welche die Öffnungen (58) definieren, divergieren, während sich die Öffnungen von der vorderen Seite (54) zur hinteren Seite (56) erstrecken.

7. Ein Hauptzylinder wie in einem der Ansprüche 1 bis 6 beansprucht,
worin die innere Wand (48) des zweiten ringförmigen Bauteils (44) zwei sich in Umfangsrichtung erstreckende, nach innen gerichtete Lippen (64) aufweist.

8. Ein Hauptzylinder wie in einem der Ansprüche 1 bis 7 beansprucht,
worin die äußere Wand (52) des zweiten ringförmigen Bauteils (44) drei sich in Umfangsrichtung erstreckende, nach außen gerichtete Rippen (66) aufweist.

9. Ein Hauptzylinder wie in einem der Ansprüche 1 bis 8 beansprucht,
worin die äußere Wand (52) des zweiten ringförmigen Bauteils (44) eine sich peripher erstreckende, nach vorn gerichtete Rippe (68) aufweist, um das Endpaßstück (16) gegen einen Ringanschlag (70) vorzuspannen, der in der Bohrung (18) benachbart deren offenem Ende (20) angeordnet ist.

10. Ein Hauptzylinder wie in einem der Ansprüche 1 bis 9 beansprucht,
worin eine Feder (40) in der Bohrung (18) zwischen dem geschlossenen Ende (22) der Bohrung und dem Kolben (14) angeordnet ist, um die elastische Vorspannung für den Kolben zu schaffen.

11. Ein Endpaßstück (16) für einen Hauptzylinder (10) wie in einem der Ansprüche 1 bis 10 beansprucht,
mit einem ersten ringförmigen Bauteil (42) aus im wesentlichen starrem Material und einem zweiten ringförmigen Bauteil (44) aus elastomerischem Material, wobei das zweite ringförmige Bauteil eine innere Wand (48), die auf das hintere Ende des Kolbens zu gerichtet werden kann und in der Lage ist, einen engen Gleitsitz damit zu bilden, und eine äußere Wand (52) aufweist, die auf die Oberfläche (24) der Bohrung an dem offenen Ende zu gerichtet werden kann und in der Lage ist, einen engen Gleitsitz damit zu bilden, das erste ringförmige Bauteil eine Anzahl von Öffnungen (58) aufweist, die sich von einer vorderen Seite (54) zu einer hinteren Seite (56) erstrecken, das zweite ringförmige Bauteil an die vordere Seite des ersten ringförmigen Bauteils und in die Öffnungen darin hinein geformt ist, um das Endpaßstück als eine einstückige Unteranordnung zu bilden, die innere Wand des zweiten ringförmigen Bauteils wenigstens eine sich in Umfangsrichtung erstreckende, nach innen gerichtete Lippe (64) aufweist, die abdichtend mit dem hinteren Ende des Kolbens in Eingriff bringbar ist, und die äußere Wand des zweiten ringförmigen Bauteils wenigstens eine sich in Umfangsrichtung erstreckende, nach außen gerichtete Rippe (66) aufweist, die abdichtend mit der Oberfläche der Bohrung in Eingriff bringbar ist.

## Revendications

1. Maître-cylindre (10) comprenant un logement (12), un alésage (18) qui s'étend dans le sens longitudinal à travers le logement et qui est ouvert à l'une de ses extrêmités (20) et fermé à l'autre extrêmité (22), un piston (14) positionné de façon à pouvoir glisser dans l'alésage et qui est ramené vers l'extrémité ouverte de l'alésage, le piston ayant une extrêmité arrière (36) qui s'étend à travers l'extrêmité ouverte, et un dispostif d'ajustement d'extrêmité (16) destiné à obturer et rendre étanche l'extrêmité ouverte de l'alésage, caractérisé en ce que :
- le dispositif d'ajustement d'extrêmité comprend un premier élément annulaire (42) réalisé dans un matériau sensiblement rigide et un second élément annulaire (44) réalisé dans un matériau élastomère, le second élément annulaire comportant une paroi intérieure (48) orientée vers l'extrêmité arrière du piston et formant un ajustement à glissement étroit avec celle-ci, et une paroi extérieure (52) orientée vers la surface (24) de l'alésage au niveau de l'extrêmité ouverte et formant un ajustement à glissement étroit avec celle-ci, le premier élément annulaire comportant un certain nombre d'orifices (58) qui s'étendent depuis une face avant (54) vers une face arrière (56), et le second élément annulaire étant moulé contre la face avant du premier élément annulaire et à l'intérieur des orifices se trouvant dans celui-ci pour former le dispositif d'ajustement d'extrêmité en un sous-ensemble d'une seule pièce, la paroi intérieure du second élément annulaire comportant au moins une lèvre (64) s'étendant dans le sens circonférentiel et orientée vers l'intérieur pour venir en position de contact hermétique avec l'extrêmité arrière du piston, et la paroi extérieure du second élément annulaire comportant au moins une arête (66) s'étendant dans le sens circonférentiel et orientée vers l'extérieur pour venir en position de contact hermétique avec la surface de l'alésage.

2. Maître-cylindre selon la revendication 1, dans lequel le premier élément annulaire (42) comporte une paroi intérieure (46) dirigée vers l'extrêmité arrière (36) du piston (14) et forme un ajustement à glissement étroit avec celle-ci, et une paroi extérieure (50) orientée vers la surface (24) de l'alésage (18) au niveau de l'extrêmité ouverte (20) et forme un ajustement à glissement étroit avec celle-ci.

3. Maître-cylindre selon la revendication 1, dans lequel le premier élément annulaire (42') comporte une paroi intérieure (46') orientée vers l'extrêmité arrière (36) du piston (14) et une paroi extérieure (50') orientée vers la surface (24) de l'alésage (18) au niveau de l'extrêmité ouverte (20), la paroi intérieure étant recouverte par un premier prolongement (82) du second élément annulaire (44') qui s'étend en direction de l'arrière, et la paroi extérieure étant recouverte par un second prolongement (80) du second élément annulaire qui s'étend en direction de l'arrière, les premier et second prolongements formant un ajustement à glissement étroit avec l'exrêmité arrière du piston et la surface de l'alésage respectivement.

4. Maître-cylindre selon la revendication 3, dans lequel le premier prolongement (82) comporte un certain nombre d'arêtes (84, 86, 88) s'étendant dans le sens axial et circonférentiel et orientées vers l'intérieur sur sa surface qui forme l'ajustement à glissement étroit avec l'extrêmité arrière (20) du piston (14).

5. Maître-cylindre selon l'une quelconque des revendications 1 à 4, dans lequel la superficie en coupe des orifices (58) au niveau de la face avant (54) est plus petite que la superficie en coupe des orifices au niveau de la face arrière (56).

6. Maître-cylindre selon la revendication 5, dans lequel les parois définissant les orifices (58) divergent au fur et à mesure que les orifices s'étendent depuis la face avant (54) jusqu'à la face arrière (56).

7. Maître-cylindre selon l'une quelconque des revendications 1 à 6, dans lequel la paroi intérieure (48) du second élément annulaire (44) comporte deux lèvres (64) s'étendant dans le sens circonférentiel et orientées vers l'intérieur.

8. Maître-cylindre selon l'une quelconque des revendications 1 à 7, dans lequel la paroi extérieure (52) du second élément annulaire (44) comporte trois arêtes (66) s'étendant dans le sens circonférentiel et orientées vers l'extérieur.

9. Maître-cylindre selon l'une quelconque des revendications 1 à 8, dans lequel la paroi extérieure (52) du second élément annulaire (44) comporte une arête (68) s'étendant sur la périphérie et orientée vers l'avant destinée à ramener le dispositif d'ajustement d'extrêmité (16) contre une butée annulaire (70) positionnée dans l'alésage (18) à côté de l'extrêmité ouverte (20) de celui-ci.

10. Maître-cylindre selon l'une quelconque des revendications 1 à 9, dans lequel un ressort (40) se trouve dans l'alésage (18) entre l'extrêmité fermée (22) de l'alésage et le piston (14) pour assurer le rappel élastique du piston.

11. Dispositif d'ajustement d'extrêmité (16) destiné à un maître-cylindre (10) selon l'une quelconque des revendications 1 à 10, comprenant un premier élément annulaire (42) réalisé en un matériau sensiblement rigide et un second élément annulaire (44) réalisé en un matériau élastomère, le second élément annulaire comportant une paroi intérieure (48) pouvant être orientée vers l'extrêmité arrière du piston et formant un ajustement à glissement étroit avec celle-ci, et une paroi extérieure (52) pouvant être orientée vers la surface (24) de l'alésage au niveau de l'extrêmité ouverte et formant un ajustement à glissement étroit avec celle-ci, le premier élément annulaire comportant un certain nombre d'orifices (58) qui s'étendent depuis une face avant (54) vers une face arrière (56), et le second élément annulaire étant moulé contre la face avant du premier élément annulaire et à l'intérieur des orifices se trouvant dans celui-ci pour former le dispositif d'ajustement d'extrêmité en un sous-ensemble d'une seule pièce, la paroi intérieure du second élément annulaire comportant au moins une lèvre (64) s'étendant dans le sens circonférentiel et orientée vers l'intérieur pour venir en position de contact hermétique avec l'extrêmité arrière du piston, et la paroi extérieure du second élément annulaire comportant au moins une arête (66) s'étendant dans le sens circonférentiel et orientée vers l'extérieur pour venir en position de contact hermétique avec la surface de l'alésage.
